# EUROPÄISCHE PATENTSCHRIFT

(11) **EP 0 349 914 B1**
(45) Veröffentlichungstag und Bekanntmachung des Hinweises auf die Patenterteilung: **20.04.1994**
(21) Anmeldenummer: 89111913.3
(22) Anmeldetag: 30.06.1989
(51) Int. Cl.: B29C 65/02, B29C 53/58, B01D 69/10

(54) **Verfahren zum Herstellen von rohrförmigen Vlieskörpern**
Process for making tubular non-woven fabric articles
Procédé pour la fabrication de corps tubulaires à partir de nappes de fibres

(30) Priorität: 04.07.1988 DE 3822546
(43) Veröffentlichungstag der Anmeldung: 10.01.1990
(73) Patentinhaber: MBT MEMBRANTECHNIK GMBH, D-66280 Sulzbach (DE)
(72) Erfinder: Penth, Bernd, Dr., D-6688 Illingen 3 (DE)
(74) Vertreter: Patentanwälte Bartels und Partner

(56) Entgegenhaltungen:
- FR-A- 1 265 312
- US-A- 3 033 728
- US-A- 3 890 125
- US-A- 4 010 054
- DATABASE WPIL, Nr. 83-47409K [20], Derwent Publications Ltd, London, GB;
- & JP-A-57 154 447 (NITTO ELECTRIC IND.) 24-09-1982

## Beschreibung

Die Erfindung betrifft ein Verfahren zum Herstellen von rohrförmigen Vlieskörpern.

Aus der JP 57-154 447 ist ein Verfahren gemäß dem Oberbegriff des Patentanspruchs 1 bekannt. Bei diesem bekannten Verfahren zum Herstellen eines rohrförmigen Vlieskörpers aus einem Streifen eines thermoplastischen Trägervlieses wird dieser in einem ersten Arbeitsgang zur Bildung eines Vliesrohres in Form einer Spirale aufgewickelt und die Längsränder des Streifens, die sich überlappen, in einem weiteren Arbeitsgang mittels einer Wärmequelle angeschmolzen und anschließend zum Herstellen einer Verbindungsnaht unter Einwirken einer Druckkraft miteinander verbunden. Der den im aufgewickelten Bereich des Vliesrohres darunterliegenden Längsrand überlappende Längsrand schützt diesen vor dem Einfluß der Wärmequelle. Bis der abgedeckte Längsrand des Vliesrohres unter dem Einfluß der Wärmequelle zur Bildung der Verbindungsnaht hinreichend angeschmolzen ist, ist der abdeckende Längsrand bereits derart erwärmt, daß Materialschädigungen nicht auszuschließen sind, die insbesondere die Haltbarkeit der Verbindungsnaht beeinträchtigen.

Das zur Spirale aufgewickelte und derart verschweißte Vliesrohr weist eine hohe Druckstabilität auf, was insbesondere eine Rolle spielt, wenn bei einem Filtriervorgang der Innenraum des Vliesrohres druckbeaufschlagt ist. Ferner ist durch das spiralförmige Übereinanderlegen des angesprochenen Streifens an der Stelle der thermischen Verbindung eine kontinuierliche, mithin also eine Endlosfertigung des Vliesrohres möglich.

Durch die gattungsfremde FR-A-1 265 312 sowie die US-A-3 890 125 sind Verfahren zum endlosen Herstellen von Rohren aus einem Streifen eines thermoplastischen Trägervlieses auch für Filtrierzwecke vorbekannt, bei denen die sich überlappenden Längsränder unmittelbar vor ihrem überlappenden Übereinanderlegen thermisch behandelt werden, wobei anstelle eines Spiralrohres ein eine Längsnaht aufweisendes Rohr zustande kommt. Diese bekannten Rohre aus dem thermoplastischen Trägermaterial weisen eine geringe Druckstabilität auf.

Ausgehend von diesem Stand der Technik liegt der Erfindung die Aufgabe zugrunde, ein Verfahren zum Herstellen von rohrförmigen Vlieskörpern zu schaffen, die sich als Rohrmembranen einsetzen lassen, die selbsttragend und äußerst druckstabil sind und die an den Stellen der thermisch zu erstellenden Verbindungsnaht einen homogenen Aufbau mit dem sonstigen Vlieskörper aufweisen.

Eine dahingehende Aufgabe wird mit den Merkmalen des Anspruches 1 gelöst.

Dadurch, daß gemäß dem kennzeichnenden Teil des Anspruches 1 beim Wickeln des Streifens zum Vliesrohr die sich überlappenden Längsränder unmittelbar vor ihrem Übereinanderlegen thermisch behandelt werden und daß für das Aufwickeln des Streifens zum spiralförmigen Vlieskörper ein Hohlstab verwendet wird, der an seinem freien Ende eine Austrittsöffnung aufweist, aus der eine Beschichtungslösung auf die Innenwand des gewickelten Vliesrohres aufbringbar ist, wobei durch den anschließenden Kontakt mit einer Koagulationslösung eine Rohrmembran gebildet wird, ergibt sich eine äußerst druckstabile, selbsttragende Rohrmembran, die über eine sehr lange Standzeit verfügt und mit der sich auch kleinste Teilchen sicher abtrennen lassen.

Bei dem erfindungsgemäßen Verfahren werden die sich überlappenden Stellen in Form der Längsränder beim Aufwickeln des Streifens zum spiralförmigen Vlieskörper nicht, wie es durch den Stand der Technik bekannt ist, nach dem Überlappungsvorgang, sondern unmittelbar vor dem Überlappen thermisch behandelt, so daß es zeitlich zusammen mit dem Überlappungsvorgang unter Bildung der Verbindungsnaht zum Verschweißen und/oder Verkleben des Trägervlieses an den Stellen der Überlappung kommt. Die zum Verbinden des Vlieses notwendige Wärmemenge wird hierbei gleichmäßig auf die beiden zu verbindenden Längsränder des Streifens verteilt und ein materialschädigender Wärmeeinfluß ist so mit Sicherheit vermeidbar.

Bei der nach diesem erfindungsgemäßen Verfahren hergestellten Vlieskörper ist die derart materialschonend hergestellte Verbindungsnaht homogener Bestandteil des übrigen Vlieskörpers, so daß die an das Vlies gestellten Anforderungen im Hinblick auf seine Reißfestigkeit, seine Haltbarkeit und die Qualität der anschließend aufzubringenden Membranschicht auch an den Stellen der Verbindungsnaht erfüllt sind.

Beim Herstellen des rohrförmigen Vlieskörpers wird sein Inneres im selben Arbeitsgang mit der Beschichtungslösung versehen, wodurch eine Membran gebildet wird. Die gewünschten Materialeigenschaften der Membran, beispielsweise ihre Porengröße, werden durch das Beschichten mitbestimmt. Mit dem erfindungsgemäßen Verfahren ist eine kontinuierliche- oder Endlosfertigung von Rohrmembranen, die in großen Stückzahlen benötigt werden, möglich. Aufgrund der spiralförmigen Anordnung der Rohrmembran und der schonenden thermischen Behandlung an der Stelle der Nahtverbindung, die ein Materialversagen an dieser Stelle verhindert, ist eine sehr hohe Druckstabilität erreicht, so daß ohne weitere Stützvorrichtungen die Rohrmembran für die Aufnahme in sog. Rohrmodulen selbsttragend ausgebildet ist.

Bei einer bevorzugten Ausführungsform wird die Verbindungsnaht von außen nochmals mittels einer thermischen Behandlung nachverfestigt, was eine weitere Verbesserung der Haltbarkeit der Verbindungsnaht mit sich bringt.

Im folgenden wird das erfindungsgemäße Verfahren anhand einer vereinfachten Zeichnung näher erläutert.

Es zeigen:
- Fig. 1: einen Teil des streifenförmigen Trägervlieses
- Fig. 2: einen Teil des aufgewickelten Bereiches des zum Vliesrohr spiralförmig aufgewickelten Streifens gemäß der Fig. 1.

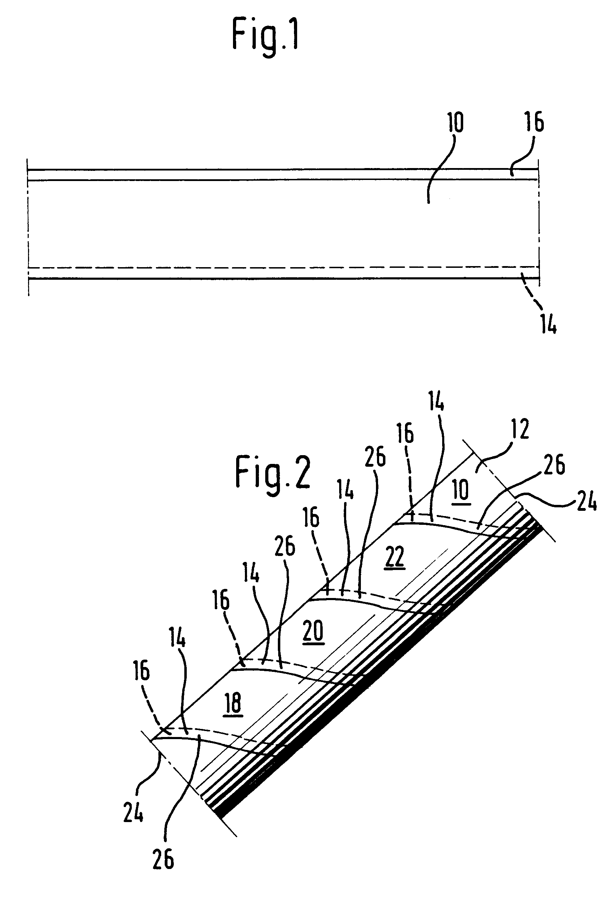

In Fig. 1 ist der Teil eines Streifens 10 eines thermoplastischen Trägervlieses, vorzugsweise in Form eines Polyestervlieses dargestellt, wie es für die Mikrofiltration, Ultrafiltration und Umkehrosmose Verwendung findet. Der Streifen 10 ist in der Art eines Endlosbandes ausbildbar, so daß sich mit ihm kontinuierlich Vliesrohre mit einem vorgebbaren Durchmesser wickeln lassen, die dann entsprechend den vorgesehenen Einsatzbedingungen ablängbar sind. Um das im wesentlichen zylindrische Vliesrohr 12 gemäß der Fig. 2 zu erhalten, wird der Streifen 10 gemäß der Fig. 1 in einer Wendel derart aufgewickelt, daß der auf der Rückseite des Streifens 10 verlaufende Längsrand 14 in Deckung kommt mit dem auf der Vorderseite des Streifens 10 verlaufenden Längsrand 16.

In Fig. 2 ist ein Teil des aufgewickelten Bereiches des Vliesrohres 12 dargestellt, wobei das in Fig. 2 dargestellte untere Ende dem in Fig. 1 dargestellten linken Endbereich des Streifens 10 entspricht. Der in Fig. 2 dargestellte gewickelte Bereich des Vliesrohres 12 in Form einer Spirale weist drei vollständig dargestellte Gänge 18, 20 und 22 auf, wobei der jeweils beim Wickeln entstehende nachfolgende Gang mit der größeren Ziffer 22 oder 20 den jeweils vorangehenden Gang mit der kleineren Ziffer 20 bzw. 18 im Bereich der Längsränder 14, 16 überdeckt bzw. überlappt.

Die beim Vliesrohr 12 (Fig. 2) übereinanderliegenden Längsränder 14, 16 bilden, wenn sie miteinander verschweißt sind, die in einer Wendel verlaufende nach ihrem Abkühlen feste Verbindungsnaht 26.

Bei dem erfindungsgemäßen Verfahren werden die beiden Längsränder 14 und 16 des Streifens 10 unmittelbar vor ihrem Übereinanderlegen zur Bildung des Vliesrohres gemäß der Fig. 2 jeweils über ein regelbar beheizbares Werkzeug (nicht dargestellt) geführt, wobei es zunächst zu einer Aufweichung bzw. zu einer oberflächigen Aufschmelzung des Vliesstoffes und nach dem zeitlich unmittelbar darauffolgenden Kontakt der beiden Längsränder 14, 16 miteinander zu einer festen Verbindung entlang der Verbindungsnaht 26 kommt. Bei der hier gezeigten Ausführungsform des erfindungsgemäßen Verfahrens werden mittels der beheizbaren Werkzeuge die gemäß der Fig. 1 dem Betrachter zugekehrte Fläche des Längsrandes 16 und die dem Betrachter der Fig. 1 abgekehrte Fläche des Längsrandes 14 thermisch behandelt, so daß die beim Überlappen während des Wickelns einander zugekehrten Flächen der beiden Längsränder 14, 16, die zur Bildung der Verbindungsnaht 26 übereinander gelegt werden, thermisch aufgeweicht bzw. angeschmolzen sind. Die hierdurch entstehende besonders haltbare Verbindungsnaht 26 wird anschließend mittels eines beheizbaren Werkzeuges vor ihrem Abkühlen entlang ihrer in Fig. 2 gesehen äußeren, für den Betrachter der Fig. 2 teilweise sichtbaren Umfangsfläche nachverfestigt, was deren Haltbarkeit nochmals verbessert.

Als besonders zweckmäßig für das erfindungsgemäße Verfahren hat es sich erwiesen, als Streifen 10 ein Band aus Vliesstoff, vorzugsweise Polyestervlies in einer Breite von 25mm zu verwenden und mit Hilfe eines Zahnriemens (nicht dargestellt) um einen Hohlstab (nicht dargestellt) von beispielsweise 12mm mit einem Steigungswinkel von etwa 54° mehrfach herumzuführen. Die beheizbaren Werkzeuge (nicht dargestellt) können mittels einem Antrieb, vorzugsweise in Form eines mittels Druckluft betriebenen Antriebes aus ihrer Arbeitsstellung wegbewegt werden, um so einen Lochbrand bei Abstellen des Vliesvortriebes in Form des Zahnriemens zu vermeiden.

Das derart hergestellte Vliesrohr 12 kann nun entweder für eine in einem getrennten Arbeitsgang erfolgende Beschichtung oder einen anderen Verwendungszweck entnommen werden, oder aber im selben Arbeitsgang mit einer eine Membran bildenden Lösung beschichtet werden. Hierfür weist der Hohlstab, auf den das Vlies in Form des Streifens 10 gewickelt wird an seinem freien Ende, wo das gewickelte und beschichtete Vliesrohr entnehmbar ist, Austrittsöffnungen auf, die die Funktion einer Ringdüse besitzen. Die mittels einer regelbaren Pumpe dieser Ringdüse zugeführte Beschichtungslösung, deren Zusammensetzung der Fachwelt bekannt ist, wird in einer Dicke von, vorzugsweise 100 bis 300 Mikrometer aufgetragen. Durch anschließenden Kontakt des beschichteten Vliesrohres mit einer Koagulationslösung entsteht eine Rohrmembran.

Die Breite der thermisch zu behandelnden Längsränder 14, 16 und damit die Breite der Verbindungsnaht 26 ist in Abhängigkeit von den späteren Einsatzbedingungen der Rohrmembran 12 mittels der beheizbaren Werkzeuge innerhalb gewisser Grenzen frei einstellbar. Ferner sind die als Wärmequelle dienenden Werkzeuge in Bezug auf ihre Konturen dem Bahnverlauf des Trägervlieses beim Wickeln anpaßbar.

Bei dem sich anschließenden Ablängen der Rohrmembran 12 mittels einer Schneidvorrichtung (nicht dargestellt) schneidet man diese an ihren Enden plan ab und erhält hierbei Öffnungen 24, die im wesentlichen eine ebene, kreisrunde Fläche darstellen. Hiermit ist ein sauberer Abschluß der Rohrmembran 12 an ihren Enden gegeben, was die Aufnahme der Rohrmembran 12 in einer Haltevorrichtung (nicht dargestellt), wie sie verwendet wird, um mehrere Rohrmembranen 12 miteinander zu bündeln, erleichtert.

Die vorstehende Beschreibung und die Zeichnung beschränken sich nur auf die Angabe von Merkmalen, die für die beispielsweise Verkörperung der Erfindung wesentlich sind.
Soweit die Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Verfahren zum Herstellen von rohrförmigen Vlieskörpern aus einem Streifen (10) eines thermoplastischen Trägervlieses, der zur Bildung eines Vliesrohres (12) in Form einer Spirale derart aufgewickelt wird, daß die Längsränder (14,16) des Streifens (10) sich zumindest im gewickelten Bereich des Vliesrohres (12) entlang einer Verbindungsnaht (26) überlappen, wobei zur Bildung dieser Verbindungsnaht (26) die Längsränder (14,16) thermisch behandelt werden, dadurch gekennzeichnet, daß beim Wickeln des Streifens (10) zum Vliesrohr (12) die sich überlappenden Längsränder (14,16) unmittelbar vor ihrem Übereinanderlegen thermisch behandelt werden und daß für das Aufwickeln des Streifens (10) zum spiralförmigen Vlieskörper (12) ein Hohlstab verwendet wird, der an seinem freien Ende eine Austrittsöffnung aufweist, aus der eine Beschichtungslösung auf die Innenwand des gewickelten Vliesrohres aufbringbar ist, wobei durch den anschließenden Kontakt mit einer Koagulationslösung eine Rohrmembran gebildet wird.

2. Verfahren nach Anspruch 1, dadurch gekennzeichnet, daß die Verbindungsnaht (26) vor ihrem Erkalten mindestens einmal entlang ihres Außen- und/oder Innenumfanges thermisch behandelt wird.

3. Verfahren nach Anspruch 1 oder 2, dadurch gekennzeichnet, daß als thermoplastisches Trägervlies ein Polyestervlies oder ein anderes Polymervlies verwendet wird.

4. Verfahren nach einem der Ansprüche 1 bis 3, dadurch gekennzeichnet, daß die Längsränder (14, 16) aus zwei Rändern des Streifens (10) gebildet werden, die voneinander abgekehrt jeweils auf der Vorder- und der Rückseite des Streifens (10) angeordnet entlang desselben verlaufen.

5. Verfahren nach einem der Ansprüche 1 bis 4, dadurch gekennzeichnet, daß die Längsränder (14, 16) an ihren nach dem Überlappen einander zugekehrten Flächen thermisch behandelt werden.

## Claims

1. Process for making tubular non-woven fabric articles from a strip (10) of a thermoplastic non-woven carrier fabric, which in order to form a non-woven fabric tube (12) is wound in the form of a spiral so that the longitudinal edges (14, 16) of the strip (10) overlap along a connection seam (26) at least in the wound region of the non-woven fabric tube (12), the longitudinal edges (14, 16) being heat treated in order to form this connection seam (26), characterized in that at the time of winding of the strip (10) to form the non-woven fabric tube (12), the overlapping longitudinal edges (14, 16) are heat treated immediately before they are laid one above the other and that for the winding of the strip (10) to form the spiral non-woven fabric article (12), a hollow rod is used, which at its free end comprises an outlet opening, from which a coating solution can be applied to the inner wall of the wound non-woven fabric tube, a tubular membrane being formed by the subsequent contact with a coagulation solution.

2. Process according to Claim 1, characterized in that before it cools, the connection seam (26) is heat treated at least once along its outer and/or inner periphery.

3. Process according to Claim 1 or 2, characterized in that a polyester non-woven fabric or another polymer non-woven fabric is used as the thermoplastic non-woven carrier fabric.

4. Process according to one of Claims 1 to 3, characterized in that the longitudinal edges (14, 16) are formed from two edges of the strip (10), which extend remote from each other respectively on the front and rear side of the strip (10) along the latter.

5. Process according to one of Claims 1 to 4, characterized in that the longitudinal edges (14, 16) are heat treated on their surfaces facing each other after overlapping.

## Revendications

1. Procédé pour la fabrication de corps tubulaires à partir d'un ruban (10) d'une nappe de fibres de support tubulaire (10) que l'on enroule, afin de former un tube de fibres (12) en forme de spirale de telle manière que les bords longitudinaux (14, 16) du ruban (10) se recouvrent, au moins, dans la région d'enroulement du tube de fibres (12) le long d'un cordon de liaison (26), cependant que, en vue de la formation de ce cordon de liaison (26), on traite les bords longitudinaux (14, 16) par la chaleur, caractérisé en ce que, au cours de l'enroulement du ruban (10) pour produire le tube de fibres (12), on traite les bords longutinaux recouvrants (14, 16) immédiatement avant qu'ils se superposent, en ce que, aux fins d'enroulement dudit ruban (10) pour produire un corps de fibres en forme de spirale (12), on utilise une tige creuse qui présente, à son extrémité libre, un orifice de sortie par lequel une solution de couchage peut être appliquée sur la paroi intérieure du tube de fibres enroulé, de sorte que le contact subséquent avec une solution de coagulation produit une membrane tubulaire.

2. Procédé selon la revendication 1, caractérisé en ce qu'on traite le cordon de liaison (28), au moins une fois, par la chaleur, avant qu'il soit refroidi, le long de son pourtour extérieur et/ou intérieur.

3. Procédé selon la revendication 1 ou 2, caractérisé en ce qu'on utilise comme nappe de fibres de support thermoplastique une nappe de polyester ou une autre nappe de polymère.

4. Procédé selon l'une quelconque des revendications 1 à 3, caractérisé en ce que les bords longitudinaux (14, 15) sont formés par deux bords du ruban (10) qui s'étendent à l'opposé, le long de la face antérieure et postérieure du ruban (10).

5. Procéde selon l'une quelconque des revendications 1 à 4, caractérisé en ce que l'on traite par la chaleur les surfaces en regard recouvrantes des bords longitudinaux (14, 16), après qu'elles se sont superposées.
